Europäisches Patentamt

European Patent Office

Office européen des brevets

(19)

(11) Veröffentlichungsnummer: **0 241 581**
B1

(12) EUROPÄISCHE PATENTSCHRIFT

(45) Veröffentlichungstag der Patentschrift:
27.12.89

(51) Int. Cl.⁴: **F16C 33/78**

(21) Anmeldenummer: 86112776.9

(22) Anmeldetag: 16.09.86

(54) Wälzlagerdichtung.

(30) Priorität: **10.04.86 DE 3612052**

(43) Veröffentlichungstag der Anmeldung:
**21.10.87 Patentblatt 87/43**

(45) Bekanntmachung des Hinweises auf die Patenterteilung:
**27.12.89 Patentblatt 89/52**

(84) Benannte Vertragsstaaten:
**AT BE CH DE FR GB IT LI NL SE**

(56) Entgegenhaltungen:
**FR-A- 1 388 347**
**FR-A- 2 491 575**
**GB-A- 1 296 020**
**US-A- 2 873 153**

(73) Patentinhaber: **Firma Carl Freudenberg, Höhnerweg 4,
D-6940 Weinheim/Bergstrasse(DE)**

(72) Erfinder: **Schmitt, Wilhelm, Dr., Im Vordersberg 8,
D-6148 Heppenheim-Erbach(DE)**

(74) Vertreter: **Weissenfeld-Richters, Helga, Dr.,
Höhnerweg 2, D-6940 Weinheim/Bergstrasse(DE)**

## Beschreibung

Die Erfindung betrifft eine Wälzlagerdichtung, umfassend einen in die nach außen geöffnete Nut des Außenringes eines gebräuchlichen Wälzlagers einschnappbarer Stützring, der mit der Stirnfläche eines hülsenähnlich ausgebildeten, metallischen Abschnittes an der ihm zugewandten Stirnfläche des Außenringes des Wälzlagers anliegt und der eine axial in Richtung des Lagers vorspringende Dichtlippe aufweist, wobei die Dichtlippe mit einer durch zwei konvergierende Kegelflächen gebildeten Dichtkante unter einer radial gerichteten, federnden Anpressung an einer zylindrisch ausgebildeten Gegenfläche anliegt.

Eine Wälzlagerdichtung der vorgenannten Art ist aus der GB-A 1 296 020 bekannt. Sie läßt sich gemeinsam mit dem Wälzlager montieren, weist indessen nach dem Zusammenfügen mit dem Wälzlager eine sehr große axiale Baulänge auf, was sowohl die sachgerechte Montage als auch die allgemeine Verwendung erschwert. Die Gegenfläche der Dichtlippe wird darüber hinaus durch die Oberfläche der gelagerten Welle gebildet, weshalb verschleißbedingte Undichtigkeiten nicht ohne weiteres beseitigbar sind.

In dem Bestreben, die beiden vorgenannten Nachteile zu vermeiden ist schon vorgeschlagen worden, einen Radialwellendichtring in dem Zwischenraum zwischen dem Außen- und dem Innenring eines Wälzlagers anzuordnen, wobei die Dichtlippe gleitend an der Außenseite des Innenringes anliegt (US-A 2 873 153). Die Ausführung setzt eine spezielle, von der Gestalt gebräuchlicher Wälzlager abweichende Ausbildung des Außen- und des Innenringes voraus, was aus Kostengründen wenig befriedigend ist. Auch läßt sie sich bei kleinen Wälzlagern nicht ohne weiteres realisieren.

Dennoch ergibt sich auch in diesem Falle der Nachteil, daß beim Auftreten einer verschleißbedingten Undichtigkeit zusammen mit dem Dichtring das wesentlich aufwendigere Wälzlager des Austauschs bedarf.

Der Erfindung liegt die Aufgabe zugrunde, eine mit einem gebräuchlichen Wälzlager beliebig kleiner Abmessung gemeinsam montierbare Wälzlagerdichtung zu zeigen, die einschließlich der Gegenfläche der Dichtlippe unabhängig von dem Wälzlager erneuerbar ist und die bei verminderter axialer Baulänge der das Wälzlager und die Wälzlagerdichtung umfassenden Einheit die Erzielung eines besonders guten Abdichtergebnisses erlaubt.

Diese Aufgabe wird erfindungsgemäß bei einer Wälzlagerdichtung der eingangs genannten Art dadurch gelöst, daß die Gegenfläche der Dichtlippe an einem hülsenähnlich ausgebildeten, metallischen Laufring vorgesehen ist, daß die Gegenfläche und der Innenring des Wälzlagers in axial aneinander angrenzenden Bereichen einen im wesentlichen übereinstimmenden Außendurchmesser haben und daß der an die Dichtkante axial in Richtung des Wälzlagers anschließende Teil der Dichtlippe und der Innenring in axialer Richtung einander zum Teil übergreifen.

Die Konstruktion der erfindungsgemäßen Wälzlagerdichtung macht sich die Tatsache zunutze, daß bei gebräuchlichen Wälzlagern stets ein axialer Abstand zwischen dem Wälzlagerkäfig und der axialen Begrenzung des Außen- und des Innenringes vorhanden ist. In den durch diesen Abstand gebildeten Freiraum taucht die axial vorspringende Dichtlippe der erfindungsgemäßen Wälzlagerdichtung teilweise ein, wodurch die die Wälzlagerdichtung und das Wälzlager umfassende Einheit trotz Verwendung einer den üblichen Radialwellendichtringen entsprechende Dichtlippe und eines gebräuchlichen Wälzlagers von besonders kurzer Baulänge ist. Dabei ist es von hervorzuhebender Bedeutung, daß sekundäre Nachteile dieser an sich bekannten Maschinenelemente nicht in Kauf genommen werden müssen. Die Vorzüge derselben sind vielmehr weiterhin in vollem Maße nutzbar.

Von besonderer Bedeutung dürfte es in dieser Hinsicht sein, daß die Gegenfläche der Dichtlippe der erfindungsgemäßen Wälzlagerdichtung unabhängig von der Außenseite des Innenringes des Wälzlagers bearbeitet und an einem von dem Innenring des Wälzlagers unabhängigen Maschinenteil, nämlich dem Laufring vorgesehen ist. Die Beschaffenheit läßt sich dadurch in Hinblick auf die Erzielung eines besonders guten Abdichtergebnisses sowie einer besonders guten Lebensdauer sehr leicht optimieren, beispielsweise durch eine Variation der Oberflächengüte und/oder des für die Herstellung des Laufringes verwendeten Werkstoffes. Auch ergibt sich durch die gegenständliche Trennung des Innenringes von dem Laufring in gewisser Hinsicht eine schwingungstechnische und thermische gegenseitige Isolierung beider Teile, was sowohl für die Gebrauchsdauer des Wälzlagers als auch diejenige der Lippendichtung von Vorteil ist.

Der Außenring der erfindungsgemäßen Wälzlagerdichtung ist mit die Stirnfläche seines hülsenähnlich ausgebildeten, metallischen Abschnittes in axialer Richtung überragenden Haltekrallen versehen, die in die auch außen geöffnete umlaufende Nute des Außenringes des Wälzlagers einrastbar sind. Die Haltekrallen haben eine in radialer Richtung wirksame Federelastizität. Sie liegen an einer in ihrem Querschnitt kegelig in Richtung der Mitte des Wälzlagers verminderten, axialen Begrenzungsfläche der Nut an. Hierdurch wird zugleich eine feste gegenseitige Verpressung zwischen den einander zugewandten, stirnseitigen Begrenzungswänden des Außenringes und des hülsenähnlich ausgebildeten, metallischen Abschnittes des Stützringes der Wälzlagerdichtung bewirkt, was von großer Bedeutung ist in Hinblick auf die Gewährleistung einer absolut senkrechten Zuordnung der Dichtkante zu der Rotationsachse. Die Dichtkante liegt unter einer radialen Anpressung an der zylindrisch in sich geschlossenen Gegenfläche des Laufringes an, wodurch dieser gegen unbeabsichtigten Verlust während der Lagerung und Handhabung gesichert ist. Die mit dem Wälzlager verknüpfte Wälzlagerdichtung läßt sich dadurch problemlos als geschlossene Einheit montieren und demontieren.

Der Laufring und der Stützring können eine übereinstimmende Erstreckung in axialer Richtung haben, was die Gewährleistung einer vorherbestimmten, gegenseitigen Zuordnung bei gegebenenfalls maschineller Montage sehr erleichtert.

Nach einer anderen Ausgestaltung ist es vorgesehen, daß der Laufring auf der von dem Innenring abgewandten Seite der Gegenfläche einen abgestuft verminderten Außendurchmesser aufweist, daß der Außenring mit einem nach innen weisenden Ringvorsprung versehen ist, daß der Ringvorsprung in den durch die Abstufung gebildeten Freiraum eingreift und daß zwischen dem Ringvorsprung und dem Laufring eine Hilfsdichtung vorgesehen ist.

Die Hilfsdichtung kann entweder als Spaltdichtung ausgebildet sein oder auch als Lippendichtung, wobei es sich im letztgenannten Falle als vorteilhaft erwiesen hat, wenn die Abstufung durch radial und axial verlaufende Begrenzungsflächen des Laufringes gebildet wird und wenn jeder der Begrenzungsflächen mindestens eine Dichtlippe der Lippendichtung zugeordnet ist. Neben einer formschlüssigen Sicherung des Laufringes gegen unbeabsichtigten Verlust wird durch diese Ausbildung das Eindringen von Staub und Schmutz aus der Umgebung in die dynamische Abdichtungszone der eigentlichen Dichtlippe verhindert. Die Verwendung entsprechend ausgebildeter Wälzlagerdichtungen empfiehlt sich daher vor allem in Bereichen, in denen mit einer stärkeren Schmutzbelastung aus der Umgebung gerechnet werden muß.

Eine beispielhafte Ausführung der erfindungsgemäßen Wälzlagerdichtung ist in der als Anlage beigefügten Zeichnung halbgeschnitten dargestellt in einer mit einem Wälzlager zusammengefaßten Einheit.

Das Wälzlager wird in dem gezeigten Anwendungsbeispiel durch ein Rillenkugellager gebildet, bei dem der Außenring 1 durch gleichmäßig auf dem Umfang verteilte Kugeln auf dem Innenring 7 abgestützt ist. Die Kugeln sind jeweils in Rillen eines angepaßten Profils angeordnet und in denselben abrollbar. Ihre gegenseitige Zuordnung ergibt sich durch den gegenseitigen Abstand der Aussparungen des Kugelkäfigs, der gleichfalls im dem Zwischenraum zwischen dem Innenring 7 und dem Außenring 1 angeordnet ist.

Der Außenring ist mit einer nach außen geöffneten, umlaufenden Nute versehen, in die die Haltekrallen 14 der Wälzlagerdichtung 2 einsetzbar sind.

Sie liegen unter einer nach innen gerichteten, elastischen Vorspannung an einer sich zur Mitte des Wälzlagers hin verjüngenden, kegelig ausgebildeten Begrenzungsfläche der Nute an, wodurch sich eine feste gegenseitige Verpressung der stirnseitigen Begrenzungsflächen des Außenringes 1 und des hülsenähnlich ausgebildeten, metallischen Abschnittes 3 des Stützringes 2 ergibt.

Die Haltekrallen 14 bilden einen einstückigen Bestandteil der außenseitigen Kunststoffbeschichtung des hülsenähnlich ausgebildeten Abschnitts 3 des Stützringes 2. Sie sind nach dem gemeinsamen Einpressen der Wälzlagerdichtung mit dem Wälzlager in die aufnehmende Gehäusebohrung formschlüssig festgelegt, was der Wälzlagerdichtung einen unverlierbaren Sitz verleiht.

Der hülsenähnlich ausgebildete, metallische Abschnitte 3 des Stützringes 2 hat im Vergleich zu üblichen Radialwellendichtringen eine verminderte Erstreckung in axialer Richtung. Seine Formstabilität ist dadurch ganz besonders groß, was es gestattet, die für die Einpressung des Wälzlagers in die aufnehmende Gehäusebohrung erforderlichen Kräfte auch unter Zuhilfenahme motorisch angetriebener Montagehilfen über den Stützring einzuleiten.

Der hülsenähnlich ausgebildete, metallische Abschnitt ist auf der von dem Wälzlger abgewandten Seite mit einem nach innen weisenden Ringvorsprung 8 versehen, an dem die Dichtlippe 10 festgelegt ist. Diese weist eine Dichtkante 13 auf, welche durch zwei konvergierende Kegelflächen 11, 12 gebildet wird. Für die erforderliche Anpressung der Dichtkante 13 an die Gegenfläche ist eine Ringwendelfeder aus metallischem Werkstoff vorgesehen, welche der Dichtkante 13 in der üblichen Weise zugeordnet ist.

Die Gegenfläche 6 wird durch die Außenseite des hülsenähnlich ausgebildeten, metallischen Laufringes 5 gebildet, der axial benachbart von dem Innenring 7 des Wälzlagers auf der Oberfläche der gelagerten Welle gelagert ist.

Die Gegenfläche hat einen Außendurchmesser, der mit dem Außendurchmesser des Innenringes 7 im wesentlichen übereinstimmt. Der auf der Seite des Wälzlagers an die Dichtkante 13 anschließende Teil der Dichtlippe greift teilweise in den Ringraum zwischen dem Innenring 7 und dem Außenring 1 des Wälzlagers ein.

Der Laufring 5 ist auf der von dem Wälzlager abgewandten Seite mit einer abgestuften Aussparung versehen, in welche der nach innen weisende Ringvorsprung 8 des Stützringes 2 eingreift. In diesem Bereich ist eine Hilfsdichtung vorgesehen, die als Lippendichtung 9 ausgebildet ist. Sie umfaßt zwei Dichtlippen, die einerseits an der sich in radialer Richtung und andererseits an der sich in axialer Richtung erstreckenden Begrenzungsfläche der Ausnehmung dichtend anliegen. Das Eindringen von Staub aus der Umgebung in den Bereich der dynamischen Abdichtungszone der Dichtlippe 10 wird hierdurch verhindert.

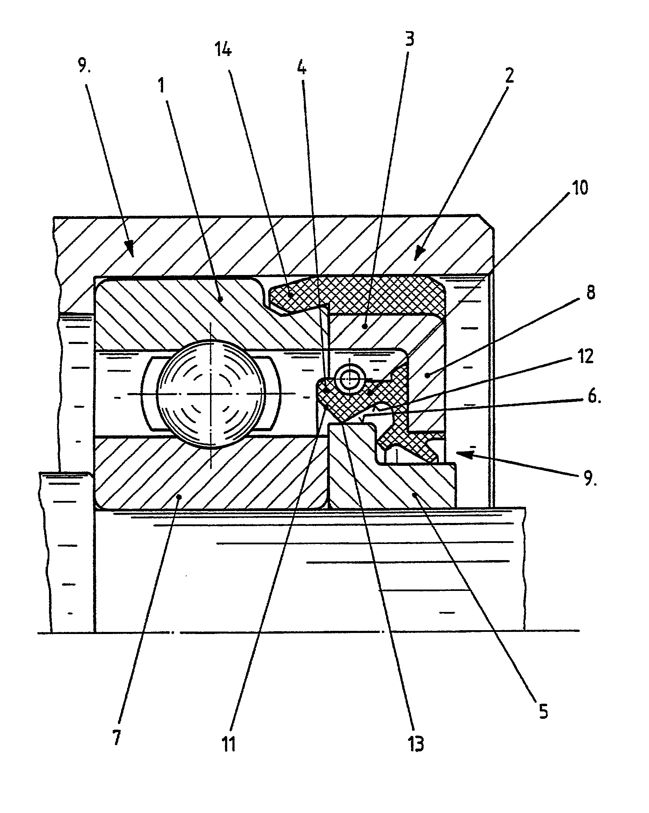

## Patentansprüche

1. Wälzlagerdichtung, umfassend einen in die nach außen geöffnete Nut des Außenrings eines gebräuchlichen Wälzlagers einschnappbaren Stützring, der mit der Stirnfläche eines hülsenähnlich ausgebildeten, metallischen Abschnittes an der ihm yugewandten Stirnfläche des Außenringes anliegt und der eine axial in Richtung des Wälzlagers vorspringende Dichtlippe aufweist, bei der die Dichtlippe mit einer durch zwei konvergierende Kegelflächen gebildeten Dichtkante unter einer radial gerichteten, federnden Anprssung an einer zylindrisch ausgebildeten Gegenfläche anliegt, dadurch gekennzeichnet, daß die Gegenfläche (6) der Dichtlippe (10) an einem hülsenähnlich ausgebildeten, metallischen Laufring (5) vorgesehen ist, daß die Gegenfläche (6) und der Innenring (7) in axial aneinander angrenyenden Bereichen einen im wesentlichen übereinstimmenden Außendurchmesser haben und daß der an die Dichtkante (13) axial in Richtung des Wälzlagers (9) anschließende Teil der Dichtlippe (10) und der Innenring 97) einander in axialer Richtung zum Teil übergreifen.

2. Wälzlagerdichtung nach Anspruch 1, dadurch gekennzeichnetl, daß der Laufring (5) eine mit dem Stützring (2) übereinstimmende Erstreckung in axialer Richtung aufweist.

3. Wälzlagerdichtung nach Anspruch 1 oder 2, dadurch gekennzeichnet, daß der Laufring (5) auf der von dem Innenring (7) abgewandten Seite der Gegenfläche (6) einen abgestuft verminderten Außendurchmeser aufweist, daß der Außenring (2) mit einem nach innen weisenden Ringvorsprung (8) versehen ist, daß der Ringvorsprung (8) in den durch die Abstufung gebildeten Freiraum eingreift und daß zwischen dem Ringvorsprung und dem Laufring (5) eine Hilfsdichtung vorgesehen ist.

4. Wälzlagerdichtung nach Anspruch 3, dadurch gekennzeichnet, daß die Hilfssichtung als Spaltdichtung ausgebildet ist.

5. Wälzlagerdichtung nach Anspruch 3, dadurch gekennzeichnet, daß die Hilfsdichtung als Lippendichtung (9) ausgebildet ist.

6. Wälzlagerdichtung nach den Ansprüchen 3 und 5, dadurch gekenyeichnet, daß die Abstufung durch eine radial und eine axial verlaufende Begrenzungsfläche des Laufringes gebildet weird und daß jeder der Begrenzungsflächen mindestens eine Dichtlippe der Lippendichtung zugeordnet ist.

## Claims

1. A rolling bearing seal composed of a back-up-ring which can be snapped into the outwardly open groove of the outer ring of a conventional rolling bearing, rests by the front face of a metallic portion of sleeve-like design against the front face facing it of the outer ring and has a sealing lip projecting axially in the direction of the rolling bearing, in which the sealing lip rests by a sealing edge formed by two converging conical surfaces against a mating surface of cylindrical design with a radially directed, resilient contact pressure, characterized in that the mating surface (6) of the sealing lip (10) is provided on a metallic track ring (5) of sleeve-like design, in that, in axially adjoining regions, the mating surface (6) and the inner ring (7) have an essentially corresponding outside diameter and in that that part of the sleeve lip (10) which adjoins the sealing edge (13) axially in the direction of the rolling bearing (9) and the inner ring (7) partially overlap one another in the axial direction.

2. A rolling bearing seal according to Claim 1, characterized in that the track ring (5) has an extension in the axial direction which corresponds to the back-up ring (2).

3. A rolling bearing seal according to either of Claims 1 or 2, characterized in that, on the side of the mating surface (6) facing away from the inner ring (7), the track ring (5) has an outside diameter reduced by stepping, in that the outer ring (2) is provided with an inward-pointing annular projection (8), in that the annular projection (8) engages into the free space formed by stepping and in that an auxiliary seal is provided between the annular projection and the track ring (5).

4. A rolling bearing seal according to Claim 3, characterized in that the auxiliary seal is designed as gap seal.

5. A rolling bearing seal according to Claim 3, characterized in that the auxiliary seal is designed as lip seal (9).

6. A rolling bearing seal according to Claims 3 and 5, characterized in that the stepping is formed by one radially extending and one axially extending boundary surface of the track ring and in that each of the boundary surfaces is allocated at least one sealing lip of the lip seal.

## Revendications

1. Joint pour palier à roulement comprenant une bague d'appui pouvant s'emboîter dans la rainure ouverte vers l'extérieur de la bague extérieure d'un palier à roulement usuel, qui prend appui sur la surface frontale d'une section métallique en forme de douille par la surface de la bague extérieure tournée vers celle-ci et qui présente une lèvre d'étanchéité faisant saillie axialement en direction du palier à roulement, dans lequel la lèvre d'étanchéité prend appui, par une arête d'étanchéité formée de deux surfaces coniques convergentes avec compression élastique orientée dans le sens radial, sur une surface opposée de forme cylindrique, caractérisé en ce que la surface opposée (6) de la lèvre d'étanchéité (10) est prévue sur une bague de roulement métallique (5) en forme de douille, que la surface opposée (6) et la bague intérieure (7) ont un diamètre extérieur essentiellement correspondant dans les zones avoisinantes dans le sens axial et que la partie de la lèvre d'étanchéité (10) se raccordant axialement à l'arête d'étanchéité (13) en direction du palier à roulement (9) et la bague intérieure (7) se recouvrent partiellement l'une l'autre en direction axiale.

2. Joint pour palier à roulement selon la revendication 1, caractérisé en ce que la bague de roulement (5) présente une extension en direction axiale qui correspond à celle de la bague d'appui (2).

3. Joint pour palier à roulement selon la revendication 1 ou 2, caractérisé en ce que la bague de roulement (5) présente, sur le côté de la surface opposée (6) opposé à la bague intérieure (7), un diamètre extérieur diminuant en gradins, que la bague extérieure (2) est pourvue d'une saillie annulaire (8) tournée vers l'intérieur, que la saillie annulaire (8) s'engage dans l'espace libre formé par les gradins et qu'il est prévu un joint auxiliaire entre la saillie annulaire et bague de roulement (5).

4. Joint pour palier à roulement selon la revendication 3, caractérisé en ce que le joint auxiliaire est constitué par un joint avec jeu.

5. Joint pour palier à roulement selon la revendication 3, caractérisé en ce que le joint auxiliaire est constitué par un joint à lèvre (9).

6. Joint pour palier à roulement selon les revendications 3 et 5, caractérisé en ce que les gradins sont formés par une surface de la bague de roulement disposée dans le sens radial et par une autre surface de la bague de roulement disposée dans le sens axial, et qu'à chacune de ces surfaces correspond au moins une lèvre d'étanchéité du joint à lèvres.